# EUROPEAN PATENT APPLICATION

(11) **EP 4 001 503 A1**
(43) Date of publication of application: **25.05.2022**
(21) Application number: 21205913.3
(22) Date of filing: 02.11.2021
(51) Int. Cl.: D21B 1/34

(54) **RAGGER**

(30) Priority: 16.11.2020 FI 20206159
(71) Applicant: Valmet Technologies Oy, 02150 Espoo (FI)
(72) Inventor: Hautaniemi, Timo, 02150 Espoo (FI)
(74) Representative: Kolster Oy Ab

(57) **Abstract**

A ragger (4) for a removal of reject from a pulper (2) in a pulping system (1) comprises a drawing roll (5) for drawing the reject from the pulper (2) in a form of a ragger rope (3), the drawing roll (5) comprising a drive shaft (6) being equipped with a pulley (7). The ragger (4) comprises at least one measuring instrument (14) for measuring at least one quantity describing a force subjected to the drawing roll (5) by the ragger rope (3) to be drawn out of the pulper (2).

Furthermore a pulping system (1) comprising a pulper (2) for a preparation of a fibre pulp suspension and a ragger (4) for a removal of reject from the pulper (2) and a method for controlling a reject handling in a pulping system (1).

## Description

### FIELD OF THE INVENTION

The invention relates to a ragger for a removal of reject from a pulper in a pulping system, the ragger comprising a drawing roll for drawing the reject from the pulper in a form of a ragger rope, the drawing roll comprising a drive shaft being equipped with a pulley.

The invention further relates to a pulping system comprising a pulper for a preparation of a fibre pulp suspension and a ragger for a removal of reject from the pulper, the ragger comprising a drawing roll for drawing reject from the pulper in a form of a ragger rope.

The invention further relates to a method for controlling a reject handling in a pulping system comprising a pulper for a preparation of a fibre pulp suspension and a ragger for a removal of reject from the pulper, the ragger comprising a drawing roll for drawing reject from the pulper in a form of a ragger rope.

### BACKGROUND OF THE INVENTION

In the initial step of preparing the fibre pulp suspension for use in the manufacture of paper and board, for instance, it is possible to use pulping as part of the process. The purpose of pulping is to defibrate the fibre material being fed into the pulper and to mix it with the water being fed into the pulper to form a fibre pulp suspension. Generally, the fibre material may for instance be cellulose or recycled fibre material or other fibre-content material from a paper or board mill.

When using recycled fibre material, a great deal of impurities, such as plastic and metal pieces, sand, and glass, typically enter the pulper with the recycled fibre material. In low consistency pulpers, it is possible to use a ragger to remove elongated plastic material and metal wires out of the pulper. A ragger usually has a drawing roll and a press roll pressing toward the drawing roll, by means of which a ragger rope or reject rope, made up of elongated plastic materials, plastic film pieces, metal wires, and other reject material that has intertwined in the pulper is pulled out of the pulper. The ragger rope pulled out of the pulper is cut with a tail cutter positioned after the ragger into suitable pieces for further processing the ragger rope.

Malfunctions, such as breaking of the ragger rope, may occur in raggers. The breaking of the ragger rope may for instance take place when the thickness of the ragger rope and, therefore, also its weight increases too much while the speed of the ragger rope is too low in comparison with the amount of reject being removed. The breaking of the ragger rope may also take place when the ragger rope is thin, in which case the pull directed to the ragger rope may break it. Occasionally, ragger malfunctions are also caused by the thickness of the ragger rope increasing so much that the rope is difficult to remove or too big for the size of the ragger.

Controlling the operation of the reject removal in the form of a ragger rope may include controlling the speed of the ragger rope and instants of an operation of the tail cutter to cut the ragger rope drawn out of the pulper. According to a prior art solution, weight sensors are applied under the frame of the ragger for sensing a weight of the ragger rope. The speed of the ragger rope and the instants of the operation of the tail cutter may be controlled based on the weight of the ragger rope sensed by these weight sensors. This solution is well-functioning but requires a somewhat complex support of the frame of the ragger because of not allowing a completely immovable support of the frame of the ragger.

### BRIEF DESCRIPTION OF THE INVENTION

An object of the present invention is to provide a novel ragger as well as a novel pulping system and method for controlling a reject handling in a pulping system.

The invention is characterized by the features of the independent claims.

The invention is based on the idea of measuring a force subjected to the drawing roll by the ragger rope to be drawn out of the pulper.

An advantage of the invention is that forces affecting to the ragger by the ragger rope and used in controlling of the operation of the reject removal from the pulper in the form of the ragger rope may be monitored in a simple way, allowing at the same time also a completely immovable attachment of the ragger at its placement.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically a partly sectional side view of a pulping system comprising a pulper, a ragger and a tail cutter;
Figure 2 shows schematically an end view of another ragger;
Figure 3 shows schematically an upper view of the ragger of Figure 2;
Figure 4 shows schematically a side view of the ragger of Figure 2; and
Figure 5 shows schematically a cross-sectional side view of the ragger of Figure 2.

For the sake of clarity, the figures show some embodiments of the invention in a simplified manner. Like reference numerals identify like elements in the figures.

### DETAILED DESCRIPTION OF THE INVENTION

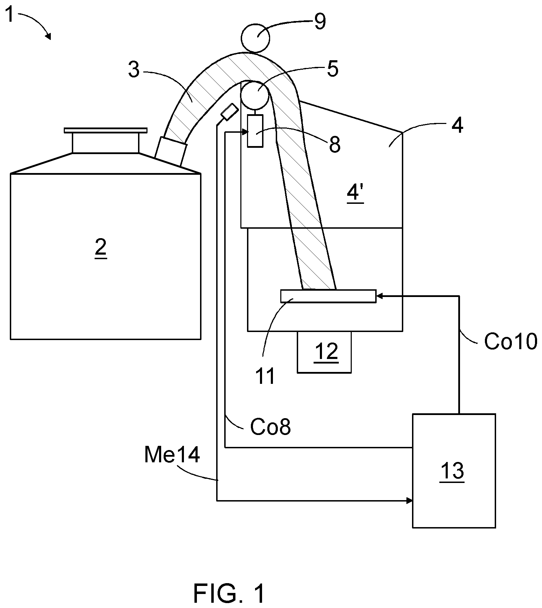

Figure 1 is a schematic partly sectional side view representing a pulping system 1 comprising a pulper 2, a ragger 4 and a tail cutter 10.

In the pulper 2, fibre material fed into the pulper 2 is mixed with water fed into the pulper 2 and is defibrated with a rotor (not shown for the sake of clarity) to form a fibre pulp suspension. Especially when using recycled fibre material, a great deal of impurities, such as pieces of plastic and metal, sand and glass, enter the pulper 2 with the recycled fibre material. As a result of the rotating movement of the pulp in the pulper 2, elongated plastic material, pieces of plastic film, and metal wires tend to intertwine or attach to each other, thus forming a ragger rope 3 or a reject rope 3. Other reject material, such as sand or glass, is also attached or intertwined to the thus formed ragger rope 3. The pulper 2 is typically a low-consistency pulper in which the consistency of the fibre pulp suspension being defibrated is typically approximately 5% or less, since in high fibre pulp suspension consistencies the formation of the ragger rope 3 abates or does not take place.

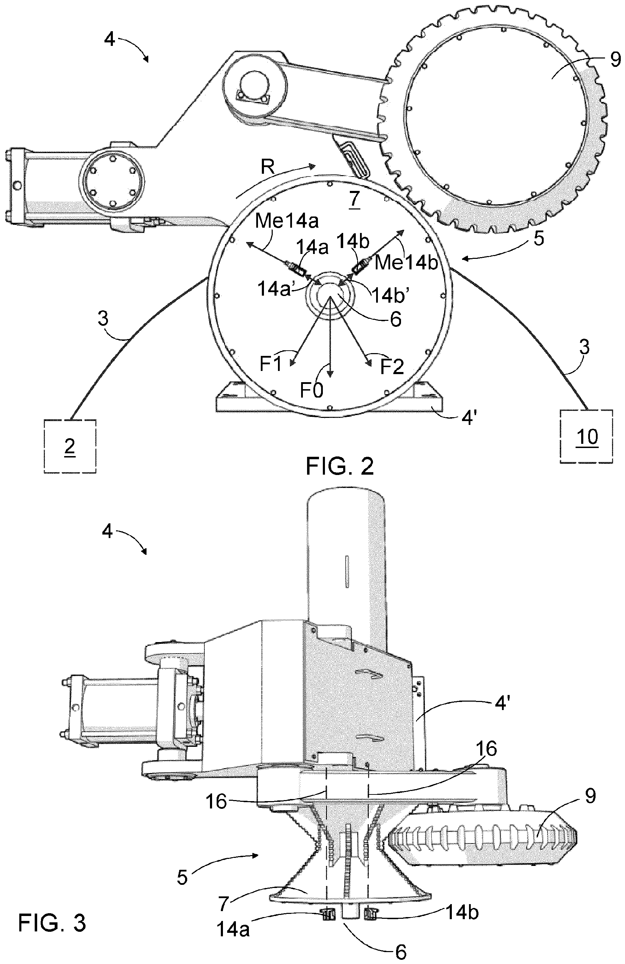

The ragger rope 3 is drawn out of the pulper 2 to the ragger 4 by a drawing roll 5 comprising a drive shaft 6 and a pulley 7. An embodiment of a drawing roll 5 is shown in more detail in Figures 2 to 5. The drawing roll 5 is rotated by a drive 8 that is shown very schematically in Figure 1. The ragger 2 often comprises also a press roll 9 that presses toward the drawing roll 5 and acts as a counterpart for the drawing roll 5. The task of the ragger 4 is to pull the ragger rope 3 out of the pulper 2 and, thus, prevent the reject material in the ragger rope 3 from moving forward in the pulping process.

After the ragger 4, there is typically a tail cutter 10 to which the ragger rope 3 is guided and where the ragger rope 3 is cut into pieces of suitable length with a cutting blade 11 or other means applicable for cutting the ragger rope 3 to the suitable sized pieces. These pieces of the ragger rope 3 are, in turn, led away from the tail cutter 10 through a reject port 12 for further processing.

Figure 1 discloses further a control unit 13 that is configurable to control the operation of at least one of the ragger 4 and the tail cutter 10, i.e. the operation of the ragger 4 and/or the tail cutter 10.

The control unit 13 may be configured to control the operation of the ragger 4 for example by controlling a rotational speed of the drawing roll 5 and thereby to control the speed of the progressive movement of the ragger rope 3 out of the pulper 2. The rotational speed of the drawing roll 5 may be controlled by controlling the operation of the drive 8 through a control connection Co8 between the control unit 13 and the drive 8.

The control unit 13 may also be configured to control the operation of the tail cutter 10 for example by controlling instants of time at which the cutting blade 11 is operated to cut the ragger rope 3 extending into the tail cutter 10. The operation of the tail cutter 10 may be controlled through a control connection ColO between the control unit 13 and the tail cutter 10.

The pulping system 1 of Figure 1 comprises a single pulper 2, a single ragger 4 and a single tail cutter 10, but the number of the pulpers, raggers and tail cutters in a pulping system may vary depending on the actual layout of the pulping system. Furthermore, the general structure and operating principle of different pulping systems are generally known to a person skilled in the art of pulping and therefore they are not discussed herein in more detail.

The pulping system 1 of Figure 1 discloses further a measuring instrument 14 for measuring at least one quantity describing a force subjected to the drawing roll 5 by the ragger rope 3 to be drawn out of the pulper 2. Figure 1 discloses a single measuring instrument 14 but the number of the measuring instruments 14 may also be higher than one, i.e. two or more, whereby at least one measuring instrument 14 and an operating principle thereof may also be different from at least one another measuring instrument 14 and the operating principle thereof.

According to an embodiment the at least one measuring instrument 14 is attached in connection with the ragger 4 such that the ragger 4 is considered to comprise the at least one measuring instrument 14. The measuring instrument 14 provides a measuring signal Me14 that is transferred to the control unit 13. The control unit 13 may, based on the measuring signal Me14, control the operation of the ragger 4 and/or the tail cutter 10.

According to an embodiment, for measuring at least one quantity describing the force subjected to the drawing roll 5 by the ragger rope 3 to be drawn out of the pulper 2, at least one measuring instrument 14 is configured to measure at least one quantity describing a force subjected to at least one of the drive shaft 6 and the pulley 7, i.e. the force subjected to the drive shaft 6 and/or to the pulley 7, by the ragger rope 3 to be drawn out of the pulper 2 by the ragger 4.

According to an embodiment, at least one measuring instrument 14 is configured to measure at least one of a position and a change in the position of at least one of the drive shaft 6 and the pulley 7 relative to the at least one measuring instrument 14. In other words, according to this embodiment at least one measuring instrument 14 is configured to measure a position and/or a change in the position of the drive shaft 6 and/or the pulley 7 relative to the at least one measuring instrument 14. The position and/or the change in the position of the drive shaft 6 and/or the pulley 7 relative to the at least one measuring instrument 14 provides at least one quantity describing the force subjected to the drawing roll 5, or subjected to the drive shaft 6 and/or to the pulley 7, by the ragger rope 3 to be drawn out of the pulper 2.

According to an embodiment, the change in the position of the drive shaft 6 and/or the pulley 7 relative to the at least one measuring instrument 14 may take place in response to a support of the drawing roll 5 to a frame 4' of the ragger 4 such that minor displacements in the position of the drawing roll 5 relative to the frame 4' of the ragger 4 may take place, without any plastic deformations of the parts, in response to the forces subjected to the drawing roll 5 by the ragger rope 3 to be drawn out of the pulper 2. According to an embodiment like this, the drive shaft 6 may be extremely rigid but a bearing of the drive shaft 6 is arranged at the frame 4' of the ragger 4 somewhat resiliently such that minor displacements in the position of the bearing and the drive shaft 6, and therefore in the position of the pulley 7, relative to the frame 4' of the ragger 4 are allowed. In this embodiment the minor displacement of the drive shaft 6 and the bearing thereof relative to the at least one measuring instrument 14 provides the quantity describing the force subjected to the drawing roll 5, and correspondingly to the drive shaft 6 and the pulley 7, by the ragger rope 3.

According to an embodiment, the change in the position of the drive shaft 6 and/or the pulley 7 relative to the at least one measuring instrument 14 may take place in response to a bending of the drive shaft 6 by the force applied by the ragger rope 3 to the drawing roll 5. According to this embodiment the bending of the drive shaft 6 provides the quantity describing the force subjected to the drawing roll 5, and correspondingly to the drive shaft 6 and the pulley 7, by the ragger rope 3.

According to an embodiment, the drive shaft 6 may be configured to provide a specific bending in response to a specific force subjected to the drive shaft 6 substantially perpendicularly to a longitudinal direction of the drive shaft 6 at a certain point of the drive shaft 6 in its longitudinal direction. In other words, the drive shaft may be implemented with predetermined bending versus force characteristics.

According to an embodiment the drive shaft 6 may be equipped with a strain gauge describing a measure of the bending of the drive shaft 6, i.e. a quantity describing a bending of the drive shaft 6. The output signal of the strain gauge thus provides the quantity describing the bending of the drive shaft 6 which, in turn, also indicates the quantity describing the force subjected to the drawing roll 5, and correspondingly to the drive shaft 6 and the pulley 7, by the ragger rope 3. In this embodiment, due to the rotational motion of the drive shaft 6, the strain gauge should preferably be self-powered and being provided with a wireless communication means for being able to transmit further to the control unit 13 the quantity describing the bending of the drive shaft 6 as the measuring signal Me14.

According to an embodiment the at least one measuring instrument 14 is configured to measure a distance from the at least one measuring instrument 14 to the at least one of the drive shaft 6 and the pulley 7, i.e. to the drive shaft 6 and/or to the pulley 7. This measurement takes place at some point in the longitudinal direction of the drive shaft 6 or at some point of the pulley 7. By measuring the distance from the at least one measuring instrument 14 to the drive shaft 6 and/or to the pulley 7 the position or the change in the position of the drive shaft 6 and/or the pulley 7 relative to the at least one measuring instrument 14 may be measured in a simple way, thus allowing a simple measurement of the quantity describing the force subjected to the drawing roll 5, or the quantity describing the bending of the drive shaft 6, due to the force subjected to the drawing roll 5 by the ragger rope 3.

According to an embodiment the at least one measuring instrument 14 comprises an optical measuring instrument. With the optical measurement instrument it is easy to measure a distance from the at least one measuring instrument 14 to the drive shaft 6 and/or to the pulley 7, allowing a contact-free measurement of the position and/or the change in the position of the drive shaft 6 and/or the pulley 7 relative to the at least one measuring instrument 14.

According to an embodiment the optical measuring instrument is a laser sensor. By using the laser sensor, the position or the change in the position of the drive shaft 6 and/or the pulley 7 relative to the at least one measuring instrument 14 may be measured very accurately. In addition to that also very small changes in the position of the drive shaft 6 and/or the pulley 7 relative to the at least one measuring instrument 14 may be detected reliably.

The solution disclosed herein allows a simple way to determine or measure forces affecting to the ragger 4 by the ragger rope 3, allowing at the same time also a completely immovable attachment of the ragger 4 at its placement.

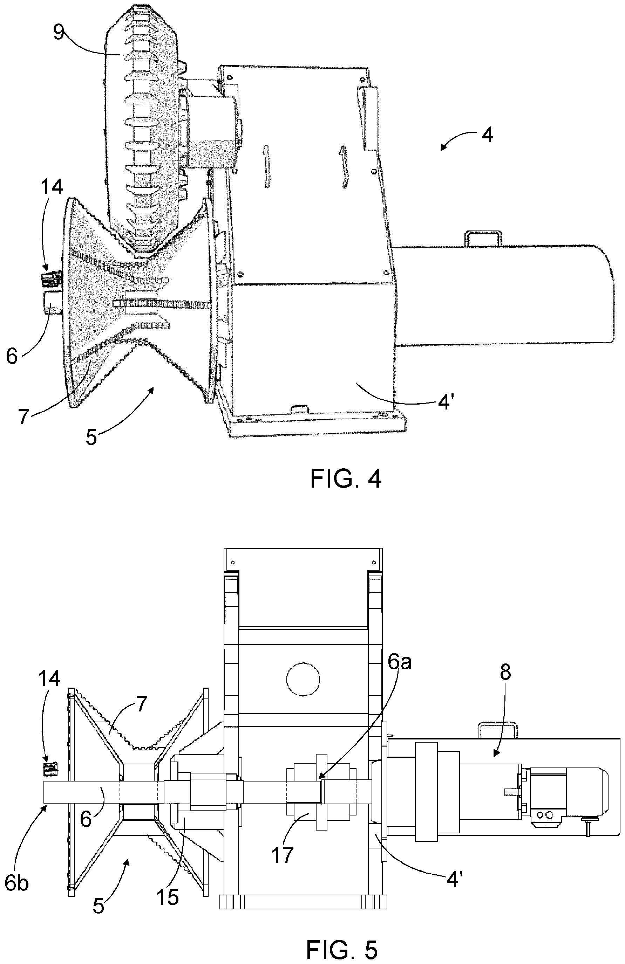

Figure 2 shows schematically an end view of another ragger 4 and Figure 3 shows schematically an upper view of the ragger 4 of Figure 2. Furthermore, Figure 4 shows schematically a side view of the ragger 4 of Figure 2 and Figure 5 shows schematically a cross-sectional side view of the ragger 4 of Figure 2.

The ragger 4 of Figures 2 to 5 comprises a frame 4' to which the drawing roll 5 and the press roll 9 are supported to, the press roll 9 being omitted in Figure 5. The drawing roll 5 comprises a drive shaft 6 and a pulley 7 arranged to the drive shaft 6. The drive shaft 6 is supported, at about its centre part in the longitudinal direction thereof, to the frame 4' of the ragger 4 by a bearing unit 15. A first or an inner end 6a of the drive shaft 6 is arranged by a coupling 17 in connection with the drive 8 for operating the drawing roll 5. A second or an outer end 6b of the drive shaft 6 is, in turn, free. The pulley 7 is positioned between the centre part of the drive shaft 6 and the second end 6b of the drive shaft 6 in such a way that the second end 6b of the drive shaft 6 extends outside the pulley 7.

A course of travel of the ragger rope 3 in the ragger 4 is shown in Figure 2 very schematically by a line denoted with the reference sign 3. In the embodiment of Figure 2, relative to the shown course of travel of the ragger rope 3, the pulper 2, from which the ragger rope 3 is to be drawn out of, remains on the left and the tail current 10 remains on the right, as shown schematically by the boxes drawn with the broken lines. The corresponding intended rotation direction of the drawing roll 5 is shown schematically by an arrow denoted with the reference sign R.

In the embodiment of the ragger 4 of Figures 2 to 5 and with the intended rotation direction as shown in Figure 5 the press roll 9 is positioned, relative to the drawing roll 5, mainly on the side of the tail cutter 10. The intended rotation direction of the ragger 4 of Figures 2 to 5 could also be opposite to that shown in Figure 5, whereby the placing of the pulper 2 and the tail cutter 10 would be interchanged.

Figures 2 to 5 further disclose two measuring instruments 14, i.e. a first measuring instrument 14a and a second measuring instrument 14b. The measuring instruments 14a, 14b are preferably laser sensors. The measuring instruments 14a, 14b are positioned substantially at the second end 6b of the drive shaft 6, at a distance from the drive shaft 6 in a radial direction thereof, the measurement instruments 14 being thus arranged apart both from the drive shaft 6 and the pulley 7 but still close to the drive shaft 6.

The measuring instruments 14a, 14b may be supported to their placements by supporting structures 16 attached in connection with the ragger 4, for example in connection with the frame 4' of the ragger 4, whereby the ragger 4 is considered to comprise the measuring instruments 14. The supporting structures 16 are shown very schematically in Figure 3 by broken lines denoted with the reference sign 16. In that case the pulping system 1 in general may be considered to comprise the measuring instruments 14. Alternatively, the measuring instruments 14 may be supported to its placement by supporting structures external from the ragger 4, such as by posts extending from a flooring. Various practical implementations of the supporting structures 16 are evident for a person skilled in the art and therefore they are not shown in more detail in the Figures.

The first measuring instrument 14a is arranged to provide a first measurement connection 14a' for measuring a distance from the first measuring instrument 14a to the drive shaft 6, in order to measure a position and/or a change in the position of the drive shaft 6 relative to the first measuring instrument 14a. The position and/or the change in the position of the drive shaft 6 relative to the first measuring instrument 14a describes the bending of the drive shaft 6 relative to the first measuring instrument 14a in response to the force subjected to the drive shaft 6 by the ragger rope 3. The first measuring instrument 14a provides a respective first measuring signal Me14a, depicting the position and/or the change in the position of the drive shaft 6 relative to the first measuring instrument 14a, and which first measuring signal Me14a is transferred to the control unit 13 for possible control actions to be initiated by the control unit 13.

The second measuring instrument 14b is arranged to provide a second measurement connection 14b' for measuring a distance from the second measuring instrument 14b to the drive shaft 6, in order to measure a position and/or a change in the position of the drive shaft 6 relative to the second measuring instrument 14b. The position and/or the change in the position of the drive shaft 6 relative to the second measuring instrument 14b describes the bending of the drive shaft 6 relative to the second measuring instrument 14b in response to the force subjected to the drive shaft 6 by the ragger rope 3. The second measuring instrument 14b provides a respective second measuring signal Me14b, depicting the position and/or the change in the position of the drive shaft 6 relative to the second measuring instrument 14b, and which second measuring signal Me14b is transferred to the control unit 13 for possible control actions to be initiated by the control unit 13.

Figure 2 discloses further three different arrows, indicated by reference signs F0, F1 and F2, depicting schematically a resultant force affected to the drawing roll 5, i.e. to the drive shaft 6 as well as to the pulley 7, especially due to the weight of the ragger rope 3 to be drawn out of the pulper 2.

The resultant force F0 indicates an operating situation wherein a weight of a portion of the ragger rope 3 on the side of the pulper 2 relative to the drawing roll 5 is substantially equal to a weight of a portion of the ragger rope 3 on the side of the tail cutter 10 relative to the drawing roll 5, that causing the bending of the drive shaft 6 substantially vertically downwards in Figure 2. In an event of the bending of the drive shaft 6 exceeding a possible predetermined limit value, a stress to the drive shaft 6 may be decreased by reducing a weight per unit length of the ragger rope 3. This may take place by increasing a speed at which the ragger rope 3 is to be drawn out of the pulper 2. At the same time it may also be controlled the instants of time at which the cutting blade 11 is operated to cut the ragger rope 3 extending into the tail cutter 10, either by reducing or increasing a length of idle periods of time between the instants of time at which the cutting blade 11 is operated. If the length of the idle periods of time between the instants of time of the operation of the cutting blade 11 is either increased or decreased, if any, may depend for example on an actual formation of the ragger rope 3 as well as mutual placing of the pulper 2, the ragger 4 and the tail cutter 10.

The resultant force F1 indicates an operating situation wherein the weight of the portion of the ragger rope 3 on the side of the pulper 2 relative to the drawing roll 5 is substantially higher than the weight of the portion of the ragger rope 3 on the side of the tail cutter 10 relative to the drawing roll 5, that causing the bending of the drive shaft 6 sloping downwards and to the left in Figure 2. In order to balance the bending of the drive shaft 6 in a horizontal direction in Figure 2, i.e. trying to get the direction of the resultant force F1 to approach the direction of the resultant force F0, it may at least temporarily be increased the speed at which the ragger rope 3 is to be drawn out of the pulper 2, this reducing the weight per unit length of the ragger rope 3 and decreasing the force bending the drive shaft 6 to the left. Alternatively, or additionally, it may also be increased the length of the idle periods of time between the instants of time at which the cutting blade 11 is operated for increasing the length of the portion of the ragger rope 3 and thereby for increasing the weight of the portion of the ragger rope 3 remaining on the side of the tail cutter 10 relative to the drawing roll 5.

The resultant force F2 indicates an operating situation wherein the weight of the portion of the ragger rope 3 on the side of the pulper 2 relative to the drawing roll 5 is substantially smaller than the weight of the portion of the ragger rope 3 on the side of the tail cutter 10 relative to the drawing roll 5, that causing the bending of the drive shaft 6 sloping downwards and to the right in Figure 2. In order to balance the bending of the drive shaft 6 in a horizontal direction in Figure 2, i.e. trying to get the direction of the resultant force F2 to approach the direction of the resultant force F0, it may at least temporarily be decreased the speed at which the ragger rope 3 is to be drawn out of the pulper 2, this increasing the weight per unit length of the ragger rope 3 and increasing the force bending the drive shaft 6 to the left. Alternatively, or additionally, it may also be decreased the length of the idle periods of time between the instants of time at which the cutting blade 11 is operated for decreasing the length of the portion of the ragger rope 3 and thereby for decreasing the weight of the portion of the ragger rope 3 remaining on the side of the tail cutter 10 relative to the drawing roll 5.

Although the ragger rope 3 may be drawn out of the pulper 2 substantially continuously, the drawing roll 5 is typically operated periodically, meaning that there are periods of time when the drawing roll 5 is operated to draw the ragger rope 3 out of the pulper 2 and another periods of time when the drawing roll 5 is idle waiting for the formation or growth of the ragger rope 3 in the pulper 2. By adjusting lengths of the mentioned time periods, and possibly a rotational speed of the adjusting roll 5 at the time periods during which the drawing roll 5 is operated, it may be affected on the speed at which the ragger rope 3 is drawn out of the pulper 2.

The measuring of the position of the drive shaft 6 relative to the measuring instrument(s) is very applicable during substantially stable operating situations wherein the changes in the forces affecting to the drawing roll 5 do not change very rapidly.

The measuring of the change in the position of the drive shaft 6 relative to the measuring instrument(s) is especially useful to detect rapid changes in the forces affecting to the drawing roll 5. These rapid changes in the forces affecting to the drawing roll 5 typically originate from an impacts between tail of the ragger rope 3 in the pulper 2 and a rotor of the pulper 2, and thereby typically provide forces resembling the resultant force F1 above. These rapid changes in the forces affecting in the ragger rope 3 increase the risk of the breaking of the ragger rope 3 and it may be reduced by increasing the speed at which the ragger rope 3 is drawn out of the pulper 2, thus reducing the length of the tail of the ragger rope 3 in the pulper 2 for avoiding excessive impacts between the rotor and the tail of the ragger rope 3.

In the embodiment of Figures 2 to 5 the measuring instruments 14a, 14b are arranged above the shaft 6, i.e. above the object the position of which relative to the measuring instruments 14a, 14b are measured such that a measuring head or unit forming part of the measuring device and actually providing the measurement connection between the respective measuring instrument and the object to be monitored, is directed at least partly downwards. This orientation of the measuring instrument is advantageous especially with measuring instruments based on optical measurement principle because of minimizing a build-up of dust or other small waste onto the measuring head, which could disturb the measurement operation. Other placement of the measuring instrumentation is also possible.

As an alternative embodiment to the one shown in Figures 2 to 5, the measuring instruments 14 could for example be positioned substantially at an end of the pulley 7, close to an outer circumference of the pulley 7 but apart from the pulley 7. At this placement the measuring instruments 14 would be arranged to measure a position and/or a change in the position of the pulley 7 relative to the measuring instruments 14, and thereby indirectly the position and/or the change in the position of the drive shaft 6 relative to the measuring instruments 14. The operation of the measurement instruments 14 would be otherwise similar like that disclosed above.

A monitoring of the change of the position of the drive shaft 6 relative to the measuring instrument 14 may also be utilized for a condition monitoring of the bearing unit 15 of the drive shaft 6. Possible malfunction in the operation of the bearing unit 15 may for example cause repetitive changes in the position of the drive shaft 6 relative to the measuring instrument 14 into the same direction relative to the measuring instrument 14, the amplitude of which may also increase as time passes.

It will be obvious to a person skilled in the art that, as the technology advances, the inventive concept can be implemented in various ways. The invention and its embodiments are not limited to the examples described above but may vary within the scope of the claims.

## Claims

1. A ragger (4) for a removal of reject from a pulper (2) in a pulping system (1), the ragger (4) comprising a drawing roll (5) for drawing the reject from the pulper (2) in a form of a ragger rope (3), the drawing roll (5) comprising a drive shaft (6) being equipped with a pulley (7),
**characterized in that**
the ragger (4) comprises at least one measuring instrument (14) configured to measure at least one quantity describing a bending of the drive shaft (6), the said at least one quantity describing the bending of the drive shaft (6) being at least one quantity describing a force subjected to the drawing roll (5) by the ragger rope (3) to be drawn out of the pulper (2).

2. A ragger as claimed in claim 1, **characterized in that**
the at least one measuring instrument (14) is configured to measure at least one of a position and a change in the position of at least one of the drive shaft (6) and the pulley (7) relative to the at least one measuring instrument (14), the said at least one of the position and the change in the position being the at least one quantity describing the bending of the drive shaft (6) by the force subjected to the drawing roll (5) by the ragger rope (3).

3. A ragger as claimed in claim 1 or 2, **characterized in that** the drive shaft (6) is configured to provide a specific bending in response to a specific force subjected to the drive shaft (6) substantially perpendicularly to a longitudinal direction of the drive shaft (6).

4. A ragger as claimed in any one of the preceding claims, **characterized in that**
the at least one measuring instrument (14) is configured to measure a distance from the at least one measuring instrument (14) to the at least one of the drive shaft (6) and the pulley (7).

5. A ragger as claimed in any one of the preceding claims, **characterized in that**
the at least one measuring instrument (14) comprises an optical measuring instrument.

6. A ragger as claimed in claim 5, **characterized in that** the optical measuring instrument is a laser sensor.

7. A pulping system (1) comprising a pulper (2) for a preparation of a fibre pulp suspension and a ragger (4) for a removal of reject from the pulper (2), the ragger (4) comprising a drawing roll (5) for drawing reject from the pulper (2) in a form of a ragger rope (3),
**characterized in that**
the pulping system (1) comprises at least one measuring instrument (14) for measuring at least one quantity describing a bending of a drive shaft (6) of the drawing roll (5), the said at least one quantity describing the bending of the drive shaft (6) being at least one quantity describing a force subjected to the drawing roll (5) by the ragger rope (3) to be drawn out of the pulper (2) and that
the pulping system (1) comprises at least one control unit (13) configurable to control the operation of the ragger (4) based on the at least one measured quantity describing the bending of the drive shaft (6) of the drawing roll (5).

8. A pulping system as claimed in claim 7, **characterized in that** the at least one control unit (13) is configurable to control a speed of removal of the ragger rope (3) from the pulper (2) based on the at least one measured quantity describing the bending of the drive shaft (6) of the drawing roll (5).

9. A pulping system as claimed in claim 7 or 8, **characterized in that**
the pulping system (1) comprises a tail cutter (10) for cutting the ragger rope (3) to be drawn out of the pulper (2) and that
the at least one control unit (13) is configurable to control the operation of the tail cutter (10) based on the at least one measured quantity describing the bending of the drive shaft (6) of the drawing roll (5).

10. A method for controlling a reject handling in a pulping system (1) comprising a pulper (2) for a preparation of a fibre pulp suspension and a ragger (4) for a removal of reject from the pulper (2), the ragger (4) comprising a drawing roll (5) for drawing reject from the pulper (2) in a form of a ragger rope (3),
**characterized by**
measuring at least one quantity describing a bending of a drive shaft (6) of the drawing roll (5), the said at least one quantity describing the bending of the drive shaft (6) being at least one quantity describing a force subjected to the drawing roll (5) by the ragger rope (3) to be drawn out of the pulper (2) and by
controlling the operation of the ragger (4) based on the at least one measured quantity describing the bending of the drive shaft (6) of the drawing roll (5).

11. A method as claimed in claim 10, **characterized by** controlling a speed of removal of the ragger rope (3) from the pulper (2) based on the at least one measured quantity describing the bending of the drive shaft (6) of the drawing roll (5).

12. A method as claimed in claim 10 or 11, **characterized by** the pulping system (1) comprising a tail cutter (10) for cutting the ragger rope (3) to be drawn out of the pulper (2), and by
controlling the operation of the tail cutter (10) based on the at least one measured quantity describing the bending of the drive shaft (6) of the drawing roll (5).
